# EUROPEAN PATENT SPECIFICATION

(11) **EP 1 662 102 B1**
(45) Date of publication and mention of the grant of the patent: **27.06.2007**
(21) Application number: 04027738.6
(22) Date of filing: 23.11.2004
(51) Int. Cl.: F01N 3/08, F01N 3/20, F02D 41/02

(54) **Method and apparatus for conversion of NOx**
Verfahren und Vorrichtung zur NOx-Umsetzung
Méthode et appareil pour la conversion de NOx

(43) Date of publication of application: 31.05.2006
(73) Proprietor: Ford Global Technologies, LLC, Dearborn, MI 48126 (US)
(72) Inventor: Acke, Filip, 421 61 Göteborg (SE); Bernler, Hans, 414 62 Göteborg (SE); Blomkvist, Gisela, 416 62 Göteborg (SE); Tengblad, Roger, 413 05 Göteborg (SE)
(74) Representative: Bergquist, Kjell Gunnar

(56) References cited:
- EP-A- 0 869 267
- EP-A- 1 380 731
- US-B1- 6 336 320

## Description

### TECHNICAL FIELD

The invention refers to a method for converting NOₓ and a control device arranged to carry out the method. The method comprises the step of controlling a temperature in a NOₓ-converter.

### BACKGROUND ART

In the field of diesel driven internal combustion engines, reduction of NOₓ in exhaust gas is a well known problem. NOₓ refers to different kinds of Nitrogen Oxides such as NO and NO₂. It is known to use so called NOₓ traps in the exhaust system for adsorbing NOₓ on a surface in a NOₓ-converter at a certain temperature when the engine is run lean and to convert NOₓ into N₂ (Nitrogen gas) during a regeneration period when the engine is run rich. Here lean refers to an air-fuel ratio above lambda equal to 1, i.e. the stoichometric air-fuel ratio, where the production of HC (hydrocarbons) and CO (carbon oxides) are low and where the production of NOₓ is high. Rich refers to a value below the lambda equal to 1 and where the production of HC and CO is high and where the production of NOₓ is relatively low. However, NOₓ does not have to be low at this running mode, but the oxygen O₂ level always is. The hydrocarbons and carbon dioxides are reductants in the regeneration process. Reductants may also be called reducing agents or reducing compounds. An additional example of a reductant is hydrogen gas H₂.

When the engine is run rich the excess amount of reductants reacts with the adsorbed NOₓ and forms N₂. The engine is then run lean again and NOₓ is again adsorbed until the engine is run rich.

The preset temperature value in the NOₓ-converter is dependent, for example, on which fuel that is used, how the converter is constructed and the materials used, and how long the converter has been in use, etc. However, the preset temperature value is chosen in a temperature region where optimum conversion of NOₓ into N₂ is possible. The temperature in the converter is dependent on the temperature in the exhaust gas which becomes higher when the number of revolutions in the engine increases and/or when the load on the engine becomes higher and/or when the engine is run rich.

One problem with prior art occurs when the engine is run at conditions where the temperature of the NOₓ-converter is well below the preset temperature value. At this low temperature the conversion of NOₓ is low, but it is known one scenario where to start regenerate at the low temperature by running the engine rich and continue running rich until the temperature has increased to the temperature close to or on the optimum temperature for regeneration. One problem with the latter solution is that the NOₓ conversion is low per se at this temperature and the process is thus a waste of fuel. Another problem is that NOₓ adsorbs well at low temperatures and desorbs with increased temperatures, why the procedure would yield an amount of desorbed NOₓ that cannot be converted and thus will escape to the environment with the exhaust gas.

Another known scenario is to wait for the engine to produce exhaust gas with temperatures high enough to heat up the converter to the predetermined temperature. However, as described above, the NOₓ adsorbs well at low temperatures and desorbs with increased temperatures, why this procedure would yield an amount of desorbed NOₓ that cannot be converted at the predetermined temperature and thus will escape to the environment with the exhaust gas.

Therefore, there is a need for an improved method and apparatus for NOₓ conversion when the engine is run at conditions where the temperature is well below the preset value.

### DISCLOSURE OF INVENTION

The invention intends to remedy the above stated problems and to find an improved method and apparatus for NOₓ conversion by use of a method and apparatus according to the appended claims.

The invention refers to a method for converting NOₓ in a NOₓ-converter in fluid communication with an engine producing exhaust gas. The method comprises the step of adsorbing NOₓ from the exhaust gas in the converter at a temperature value of the NOₓ-converter below a predetermined temperature value of the NOₓ-converter to a predetermined adsorption value being the maximum amount of NOₓ to be adsorbed/stored at the predetermined temperature value, and heating the converter to the predetermined temperature value, and thereafter starting a regeneration process by addition of reducing agents.

The temperature value of the NOₓ-converter below a predetermined temperature value of the NOₓ-converter may be any temperature value up to the predetermined temperature value.

The inventive method thus comprises the step of controlling a temperature in a NOₓ-converter (hereinafter called the converter) such that when NOₓ have been adsorbed in the converter to the predetermined adsorption value being the maximum amount of NOₓ to be stored at the predetermined temperature value, the converter is heated to the predetermined temperature value whereafter the regeneration process starts by addition of reducing agents.

One benefit of the invention is that NOₓ is adsorbed in the converter in an optimum amount at a low temperature, i.e. a temperature below the predetermined temperature value, and no or little NOₓ will desorb during the increase from the low temperature to the predetermined temperature. This means that even though the engine is run during conditions generating less heat than necessary in order to heat the converter to the predetermined temperature there is an optimum conversion of NOₓ at the conditions prevailing since no or little NOₓ of the adsorbed NOₓ desorbs during the heating up phase but is converted at the predetermined temperature.

The predetermined temperature value is preferably a temperature value of the NOₓ-converter where the conversion of NOₓ is optimum. The optimum conversion is dependent on a number of factors and is known to the skilled person. Some of the factors have been descried above in connection to the description of prior art. The predetermined temperature value may also be a different value suitable for the current situation. For example, an automobile manufacturer may choose a different predetermined temperature value, higher or lower than the optimum temperature value, dependent on other factors than the optimum conversion, for example fuel consumption

The converter may be heated to the predetermined temperature value by changing the running conditions on the engine without running the engine rich enough to start a regeneration process. Here regeneration refers to the conversion of NOₓ by addition of reductants. The reducing agents preferably comprise hydrocarbons or carbon oxides, but may also comprise another suitable reducing agent, for example hydrogen gas. The running conditions may be changed by an increased number of revolutions and/or by changing the timing of ignition and/or changing the air/fuel ratio. However, the latter case is with the above restrictions. Further examples are throttling or the closing of vains on turbines, or raising the back pressure. The converter may also be heated by electric means and/or by use of a heat exchanger for example by leading hot air from a position upstream the exhaust pipe system, for example at a position close to the cylinders, via an insulated conductor to the converter. Any other suitable means for heating the converter at the right moment may also be contemplated.

According to the invention NOₓ is stored at a temperature below the predetermined temperature value and during conditions where the engine is run at lean conditions. The regeneration process starts when the engine is shifted from running during lean conditions to running during rich condition.

As stated before lean refers to a value above a stoichometric air-fuel ratio and rich refers to a value below the stoichometric air-fuel ratio.

The regeneration, i.e. the rich running condition, proceeds during a predetermined time period, preferably in the range 2-15 second, until all or the main part of the adsorbed NOₓ have been converted. The engine is then shifted back to normal running conditions prevailing at that point in time. This normal running conditions may be the same conditions as before the heating process started or another condition dependent on, for example, the driver and/or the terrain. However, after regeneration the engine is normally changed back to running during lean conditions until the next predetermined value for stored NOₓ is reached.

According to one embodiment, the addition of reducing agents is done by running the engine rich. According to another embodiment the addition of reducing agents is done by injection of the reducing agent into the exhaust gas, upstream the converter. A combination of the two enhancing methods is also possible. The reducing agents are preferably hydrocarbons.

The engine is preferably a Diesel engine which is preferably run on diesel.

In one embodiment of the invention, the converter comprises two converters placed in the exhaust pipe system at different distances from the engine.

As stated above, the heating of the converter starts when NOₓ have been adsorbed in the converter to the predetermined adsorption value being the maximum amount of NOₓ to be stored at a predetermined temperature value of the NOₓ-converter. The absorbed amount of NOₓ may be estimated by mapping the amount of NOₓ out from the engine and to have a counter within the converter that is constructed to keep track on adsorbed NOₓ as a function to aging, sulpher poisoning, temperature, engine out NOₓ, space velocity, etc. Another possibility could be to use a NOₓ sensor before and after the NOₓ trap, i.e. the converter.

The converter may be any suitable converter and may use any suitable compounds suitable for the conversion of NOₓ, for example compounds that store/adsorbs NOₓ as Nitrates eg. Barium nitrate.

The invention also refers to a control device for converting NOₓ. The control device is arranged to carry out the above described method. The control device is thus arranged to control a temperature in a NOₓ-converter in fluid communication with an engine producing exhaust gas such that when the NOₓ-converter has adsorbed NOₓ from the exhaust gas in the converter at a temperature of the NOₓ-converter below a predetermined temperature value of the NOₓ-converter to a predetermined adsorption value being the maximum amount of NOₓ to be stored at the predetermined temperature value, the control device controls a heating device arranged to heat the converter to the predetermined temperature value whereafter the control device is arranged to start a regeneration process by addition of reducing agents.

The heating device refers to a device for carrying out any of the above described heating scenarios.

The control device may be any suitable means for controlling devices in dependence an algorithm dependent on certain parameters. One example of such a control device is a computer, a logic circuit or another suitable controlling means.

The above described benefits with the method refer also to the control device.

### BRIEF DESCRIPTION OF DRAWINGS

The invention will below be explained in further details in connection to a number of figures, where;
- Figure 1: schematically shows a combustion system for an automobile.
- Figure 2: schematically shows a NOₓ-conversion diagram.

### EMBODIMENTS OF THE INVENTION

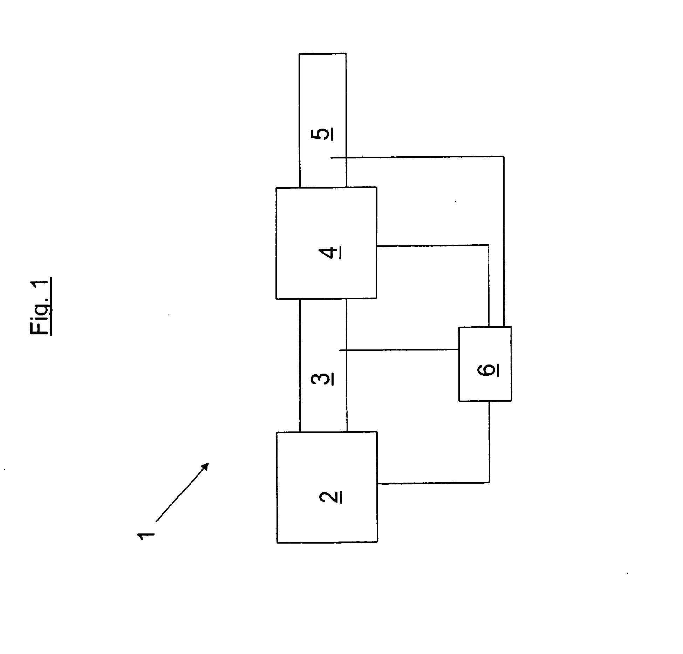

Figure 1 schematically shows a combustion system 1 comprising an engine 2; a first exhaust pipe 3 coupled to the engine; a first NOₓ-converter 4 coupled to the first exhaust pipe; a second exhaust pipe 5 coupled to the first NOₓ-converter. A second NOₓ-converter may be coupled to the second exhaust pipe and a third exhaust pipe will then be coupled to the second NOₓ-converter. When the engine is running exhaust gas is conducted via the exhaust pipes and the NOₓ-converter(s) to the ambient air.

Figure 1 also shows a control device 6 arranged for converting NOₓ in the NOₓ-converter. The converter 4 is in fluid communication with the engine 2 via the first exhaust pipe 3. The engine 2 produces exhaust gas and the converter 4 is arranged to adsorb NOₓ from the exhaust gas in the converter 4 at any temperature value below a predetermined temperature value to a predetermined adsorption value being the maximum amount of NOₓ to be stored at the predetermined temperature value. The control device 6 is arranged to control the temperature in the converter 4 such that when the predetermined value for NOₓ-adsorption is reached, the control device 6 controls a heating device (not shown) arranged to heat the converter 4 to the predetermined temperature value. When the predetermined temperature value is reached the control device 6 is arranged to start a regeneration process by addition of reducing agents.

Figure 1 shows that the control device 6 is coupled/connected to the engine 2, the converter 4 and to a position in the first exhaust pipe 2 and to a position in the second exhaust pipe 5. The couplings/connections are intended to show that the control device 6 gets input parameters from all or some of the parts in the combustion system 1 and that the control device 6 may affect all or some parts in the combustion system 1 by output parameters, depending on the input parameters.

The input parameters may be engine rpm, and/or torque, and/or load, and/or the amount of NOₓ in the exhaust gas both before and after the converter 4, and/or the temperature in the converter, and/or the amount of NOₓ adsorbed in the converter, and/or any other suitable parameter necessary for the control of the NOₓ-conversion.

The input parameters may be engine rpm, and/or air to fuel ratio, and/or torque, and/or load, and/or the amount of NOₓ in the exhaust gas both before and after the converter 4, and/or the temperature in the converter, and/or the amount of NOₓ adsorbed in the converter, and/or any other suitable parameter necessary for the control of the NOₓ-conversion.

The output parameters may be a parameter changing the conditions in the system, for example the engine rpm, and/or air to fuel ratio, and/or torque, and/or load, and/or the temperature in the converter, and/or injection of a reducing agent upstream the converter, and/or any other suitable parameter necessary for heating the converter to the predetermine temperature value and to thereafter start the regeneration.

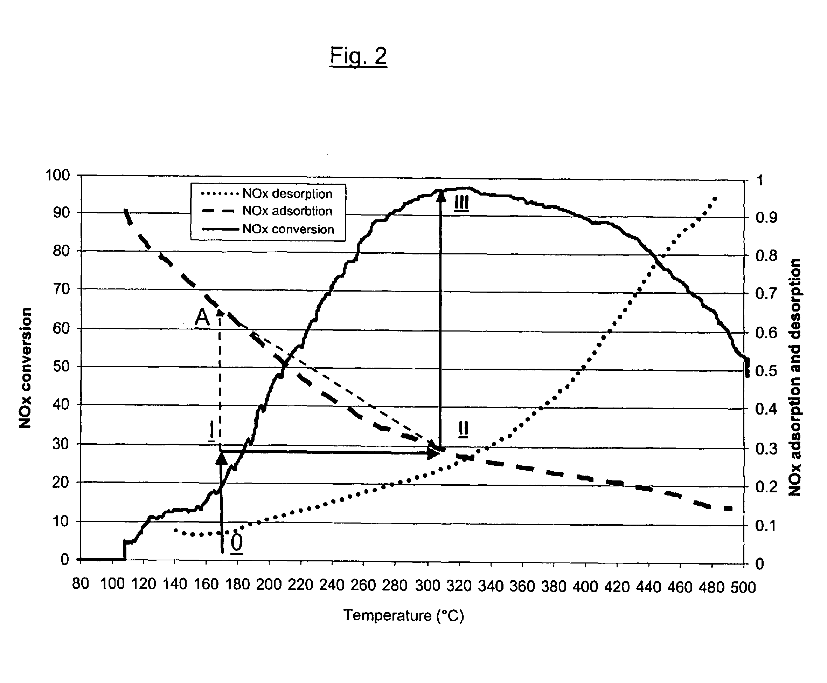

Figure 2 schematically shows a NOₓ-conversion diagram for a NOₓ-converter 4 according to Fig. 1. The diagram may also be a diagram for the second NOₓ-converter (Not shown). Figure 2 shows NOₓ-conversion Vs temperature with a continuous line; NOₓ-adsorption Vs temperature with a dashed line; and NOₓ-desorption with a dotted line. Figure 2 also shows continuous arrows marking the inventive conversion path and dashed arrows marking prior art conversion path. The temperature refers to the temperature in the NOₓ-converter 4. The NOₓ-conversion diagram changes due to a number of factors, for example, aging and choice of catalytic material, which is well known in prior art. The diagram is only one example, and the diagram will be different dependent on the previously described parameters, for example the materials used in the converter and the aging, etc.

The inventive method comprises the step of controlling the temperature in the NOₓ-converter 4 (hereinafter called the converter) in dependence on the NOₓ₋conversion diagram valid at the present point in time.

In figure 2 the predetermined temperature value corresponds to a temperature value in point II and point III in the diagram. Point III refers to the maximum NOₓ-conversion possible for the specific converter 4 and point II refers to the maximum amount of NOₓ that can be adsorbed/stored in the converter 4 at the predetermined temperature. The predetermined temperature value thus refers to the temperature where the conversion of NOₓ is optimum, i.e. at its maximum level.

The arrow going from point 0 to point I refers to the NOₓ being adsorbed in the converter 4 to the predetermined value of NOₓ adsorption being the maximum amount of NOₓ to be stored at the predetermined temperature value. The dashed arrow going from point I to point A refers to a possible amount of NOₓ to be adsorbed at the present temperature. As can be seen in figure 2, point I and point A refers to a lower temperature value than point II and point III. The converter 4 may adsorb more NOₓ at low temperature than at a high temperature, at least until the temperature has reached the temperature in point III whereafter the NOₓ adsorption decreases with increased temperature.

The invention refers to a method where the converter 4 is heated from the temperature value in point I to the predetermined temperature value in point II, when the adsorption of NOₓ has reached point I, i.e. has reached the predetermined and maximum value for adsorbed NOₓ in point II. When the converter 4 has reached the predetermined temperature value in point II, a regeneration process starts by addition of reducing agents as described in

### prior art.

Should the converter 4 not have been heated in point I, i.e. when the adsorbed NOₓ in point I has reached the predetermined value, the NOₓ would have been further adsorbed at the temperature in point I to the amount referred to in point A. When the converter 4 then would have been heated, for example when the load on the engine is increased and/or when the number of revolutions is increased, etc., the excess amount of NOₓ would have been desorbed during the increase from the low temperature of the converter in point I to the predetermined temperature of the converter in point II. This is shown by a dashed arrow going form point A to point II, and is also shown by the dotted line going from a point above point 0 to a point close to point II. It should be noted that the desorption of NOₓ is something that shall be avoided because the desorbed NOₓ is propelled to the ambient air with the exhaust and will not take part in the conversion to the more desirable product N₂, why the overall conversion of NOₓ will be decreased.

## Claims

1. A method for converting NOₓ in a NOₓ-converter (4) in fluid communication with an engine (2) producing exhaust gas, the method comprising the step of adsorbing NOₓ from the exhaust gas in the converter (4) at a temperature of the NOₓ-converter below a predetermined temperature value of the NOₓ-converter (4) to a predetermined adsorption value being the maximum amount of NOₓ to be adsorbed at the predetermined temperature value, and heating the converter (4) to the predetermined temperature value, and thereafter starting a regeneration process by addition of reducing agents.

2. A method according to claim 1, wherein the reducing agents comprises hydrocarbons and/or carbon oxides and/or hydrogen.

3. A method according to claim 1 or 2, wherein the regeneration process comprises the step of converting the adsorbed NOₓ to N₂.

4. A method according to any one of the preceding claims, wherein the predetermined temperature value being a temperature value of the NOₓ-converter where the conversion of NOₓ is optimum.

5. A method according to any one of the preceding claims, wherein the NOₓ is adsorbed at a temperature below the predetermined temperature value and during conditions where the engine (2) is run at lean conditions.

6. A method according to any one of the preceding claims, comprising the step of heating the converter (4) to the predetermined temperature value by changing the running conditions on the engine (2) without running the engine (2) rich enough to start the regeneration process, or heating the converter by electric means and/or by use of a heat exchanger.

7. A method according to anyone of the preceding claims, wherein the addition of reducing agents is done by running the engine (2) rich, or by injecting reducing agents into the exhaust gas upstream the converter (4) or a combination of the two reducing agents enhancing methods.

8. A method according to anyone of the preceding claims, wherein the regeneration process starts when the engine (2) is shifted from running during lean conditions to running during sufficiently rich conditions for the regeneration process.

9. A method according to anyone of the preceding claims, wherein the regeneration process proceeds during a predetermined time period until all or the main part of the adsorbed NOₓ has been converted, whereafter the engine (2) is shifted back to running during lean conditions until the next predetermined adsorption value for stored NOₓ is reached.

10. A method according to anyone of the preceding claims, wherein the engine (2) is a Diesel engine run on diesel.

11. A control device (6) arranged for converting NOₓ in a NOₓ-converter in fluid communication with an engine (2) producing exhaust gas, the control device (6) being arranged to control a temperature in the converter (4) such that when the converter (4) has adsorbed NOₓ from the exhaust gas in the converter (4) at a temperature below a predetermined temperature value to a predetermined value being the maximum amount of NOₓ to be stored at the predetermined temperature value, the control device (6) controls a heating device arranged to heat the converter (4) to the predetermined temperature value whereafter the control device (6) is arranged to start a regeneration process by addition of reducing agents.

## Patentansprüche

1. Verfahren zum Umwandeln von NOₓ in einem NOₓ-Konverter (4), der sich in fluider Verbindung mit einem Motor (2) befindet, der Abgas erzeugt, wobei das Verfahren den Schritt des Adsorbierens von NOₓ aus dem Abgas in dem Konverter (4) bei einer Temperatur des NOₓ-Konverters unterhalb eines vorherbestimmten Temperaturwerts des NOₓ-Konverters (4) bis zu einem vorherbestimmten Adsorptionswert, der die maximale Menge an zu adsorbierenden NOₓ bei dem vorherbestimmten Temperaturwert darstellt, und des Erhitzens des Konverters (4) auf den vorherbestimmten Temperaturwert und danach des Beginnens eines Regenerationsverfahrens durch Zugabe eines Reduktionsmittels aufweist.

2. Verfahren nach Anspruch 1, wobei das Reduktionsmittel Kohlenwasserstoffe und/oder Kohlenoxide und/oder Wasserstoff umfasst.

3. Verfahren nach Anspruch 1 oder 2, wobei das Regenerationsverfahren den Schritt des Umwandelns des adsorbierten NOₓ in N₂ umfasst.

4. Verfahren nach einem der vorhergehenden Ansprüche, wobei der vorherbestimmte Temperaturwert ein Temperaturwert des NOₓ-Konverters ist, bei dem die Umwandlung des NOₓ optimal ist.

5. Verfahren nach einem der vorhergehenden Ansprüche, wobei das NOₓ bei einer Temperatur unterhalb des vorherbestimmten Temperaturwertes und unter Bedingungen, bei denen der Motor (2) unter mageren Bedingungen betrieben wird, adsorbiert wird.

6. Verfahren nach einem der vorhergehenden Ansprüche, das den Schritt des Erwärmens des Katalysators (4) auf den vorherbestimmten Temperaturwert durch Ändern der Betriebsbedingungen des Motors (2), ohne den Motor (2) fett genug zu betreiben, um den Beginn des Regenerationsverfahrens zu starten, oder des Erwärmens des Konverters durch elektrische Mittel und/oder durch die Verwendung eines Wärmetauschers umfasst.

7. Verfahren nach einem der vorhergehenden Ansprüche, wobei die Zugabe des Reduktionsmittels durch Betreiben des Motors (2) im fetten Betrieb oder durch Einspritzen von Reduktionsmitteln in den Abgasstrom stromaufwärts des Konverters (4) oder einer Kombination der zwei Reduktionsmittel verbessernden Verfahren erzielt wird.

8. Verfahren nach einem der vorhergehenden Ansprüche, wobei das Regenerationsverfahren beginnt, wenn der Motor (2) vom Betrieb unter mageren Bedingungen zum Betrieb unter ausreichend fetten Bedingungen für das Regenerationsverfahren verändert wird.

9. Verfahren nach einem der vorhergehenden Ansprüche, wobei das Regenerationsverfahren über einen vorherbestimmten Zeitraum fortschreitet, bis alles oder der Hauptteil des adsorbierten NOₓ umgewandelt wurde, wonach der Motor (2) zurück zum Betrieb unter mageren Bedingungen verändert wird, bis der nächste vorherbestimmte Adsorptionswert für gespeichertes NOₓ erreicht ist.

10. Verfahren nach einem der vorhergehenden Ansprüche, wobei der Motor (2) ein Dieselmotor ist, der mit Diesel betrieben wird.

11. Steuervorrichtung (6), eingerichtet zum Umwandeln von NOₓ in einem NOₓ-Konverter, der sich in fluider Verbindung mit einem Motor (2) befindet, der Abgas erzeugt, wobei die Steuervorrichtung (6) eingerichtet ist, um eine Temperatur in dem Konverter (4) so zu steuern, dass die Steuervorrichtung (6), wenn der Konverter (4) NOₓ aus dem Abgas in dem Konverter (4) bei einer Temperatur unterhalb eines vorherbestimmten Temperaturwertes bis zu einem vorherbestimmten Wert, der die maximale Menge an NOₓ ist, die bei dem vorherbestimmten Temperaturwert gespeichert werden soll, adsorbiert hat, eine Heizvorrichtung steuert, die so eingerichtet ist, den Konverter (4) auf den vorherbestimmten Temperaturwert zu steuern, wonach die Steuervorrichtung (6) eingerichtet ist, um ein Regenerationsverfahren durch Zugabe von Reduktionsmitteln zu starten.

## Revendications

1. Procédé pour convertir du NOₓ dans un convertisseur de NOₓ (4) en communication de fluide avec un moteur (2) produisant un gaz d'échappement, le procédé comprenant l'étape d'adsorption de NOₓ à partir du gaz d'échappement dans le convertisseur (4) à une température du convertisseur de NOₓ inférieure à une valeur prédéterminée de température du convertisseur de NOₓ (4), jusqu'à une valeur d'adsorption prédéterminée correspondant à la quantité maximum de NOₓ destinée à être adsorbée à la valeur de température prédéterminée, et de chauffage du convertisseur (4) à la valeur de température prédéterminée, et d'initiation ultérieure d'un processus de régénération par addition de réactifs réducteurs.

2. Procédé selon la revendication 1, dans lequel les agents réducteurs comprennent des hydrocarbures et/ou des oxydes de carbone et/ou de l'hydrogène.

3. Procédé selon la revendication 1 ou 2, dans lequel le processus de régénération comprend l'étape de conversion des NOₓ adsorbés en N₂.

4. Procédé selon l'une quelconque des revendications précédentes, dans lequel la valeur de température prédéterminée est une valeur de température du convertisseur de NOₓ à laquelle la conversion de NOₓ est optimum.

5. Procédé selon l'une quelconque des revendications précédentes, dans lequel les NOₓ sont adsorbés à une température inférieure à la valeur de température prédéterminée et dans des conditions dans lesquelles le moteur (2) fonctionne dans des conditions pauvres.

6. Procédé selon l'une quelconque des revendications précédentes, comprenant l'étape de chauffage du convertisseur (4) à la valeur de température prédéterminée en modifiant les conditions de fonctionnement du moteur (2) sans faire fonctionner le moteur (2) dans des conditions suffisamment riches pour initier le processus de régénération, ou de chauffage du convertisseur par des moyens électriques et/ou en employant un échangeur de chaleur.

7. Procédé selon l'une quelconque des revendications précédentes, dans lequel l'addition de réactifs réducteurs est effectuée en faisant fonctionner le moteur (2) dans des conditions riches, ou en injectant des agents réducteurs dans le gaz d'échappement en amont du convertisseur (4) ou une combinaison des deux procédés d'activation par des agents réducteurs.

8. Procédé selon l'une quelconque des revendications précédentes, dans lequel le processus de régénération commence lorsque le moteur (2) est changé d'un fonctionnement dans des conditions pauvres pour un fonctionnement dans des conditions suffisamment riches pour le processus de régénération.

9. Procédé selon l'une quelconque des revendications précédentes, dans lequel le processus de régénération se déroule au cours d'une période prédéterminée jusqu'à ce que la totalité ou la majeure partie des NOₓ adsorbés ait été convertie, après quoi le moteur (2) est ramené à un fonctionnement dans des conditions pauvres jusqu'à ce que la valeur d'adsorption prédéterminée suivante de NOₓ conservés ait été atteinte.

10. Procédé selon l'une quelconque des revendications précédentes, dans lequel le moteur (2) est un moteur diesel fonctionnant avec un carburant pour moteur diesel.

11. Dispositif de commande (6) conçu pour convertir du NOₓ dans un convertisseur de NOₓ en communication de fluide avec un moteur (2) produisant un gaz d'échappement, le dispositif de commande (6) étant conçu pour réguler une température dans le convertisseur (4) de telle façon que, lorsque le convertisseur (4) a adsorbé NOₓ à partir du gaz d'échappement dans le convertisseur (4) à une température inférieure à une valeur de température prédéterminée jusqu'à une valeur prédéterminée correspondant à la quantité maximum de NOₓ destinée à être emmagasinée à la valeur de température prédéterminée, le dispositif de commande (6) commande un dispositif de chauffage conçu pour chauffer le convertisseur (4) à la valeur de température prédéterminée, après quoi le dispositif de commande (6) est agencé pour commencer un processus de régénération par addition d'agents réducteurs.
